# EUROPÄISCHE PATENTSCHRIFT

(11) **EP 2 435 231 B1**
(45) Veröffentlichungstag und Bekanntmachung des Hinweises auf die Patenterteilung: **12.02.2014**
(21) Anmeldenummer: 10723971.7
(22) Anmeldetag: 21.05.2010
(51) Int. Cl.: B29C 44/34, C08J 9/12, C08J 9/18

(54) **WASSER ALS TREIBMITTEL FÜR POLYURETHANE**
WATER AS A PROPELLANT FOR POLYURETHANES
UTILISATION D'EAU COMME AGENT D'EXPANSION POUR POLYURÉTHANES

(30) Priorität: 26.05.2009 EP 09161079
(43) Veröffentlichungstag der Anmeldung: 04.04.2012
(73) Patentinhaber: BASF SE, 67056 Ludwigshafen (DE)
(72) Erfinder: BRAUN, Frank, 67063 Ludwigshafen (DE); PRISSOK, Frank, 49448 Lemförde (DE)
(86) Internationale Anmeldenummer: PCT/EP2010/057035
(87) Internationale Veröffentlichungsnummer: WO 2010/136398

(56) Entgegenhaltungen:
- EP-A2- 1 275 687
- WO-A1-2007/082838
- DE-A1- 2 158 608
- US-A- 4 613 629

## Beschreibung

Die vorliegende Erfindung betrifft ein Verfahren zur Herstellung eines expandierbaren Polyurethans enthaltend Wasser als Treibmittel, umfassend mindestens den Schritt (A) Lagern des Polyurethans in Wasser, so dass Wasser von dem Polyurethan aufgenommen wird, um ein expandierbares Polyurethan zu erhalten, sowie ein Verfahren zur Herstellung eines expandierten Polyurethans, umfassend diesen Schritt (A) und mindestens den Schritt (B) Verdampfen des in dem Polyurethan aus Schritt (A) enthaltenen Wassers, um ein expandiertes Polyurethan zu erhalten.

Verfahren zur Herstellung von expandierbaren bzw. expandierten thermoplastischen Polymeren sind aus dem Stand der Technik bereits bekannt.

US 6,342,540 B1 offenbart ein Verfahren zur Herstellung von expandierbaren StyrolPolymeren enthaltend Wasser als Treibmittel. Dazu wird eine Polystyrol-Schmelze mit Wasser als Treibmittel in Gegenwart eines Emulgierhilfsmittels in einem Extruder vermischt und extrudiert. Die Verfahrensführung ist kompliziert.

EP 1 347 008 A2 offenbart ein Verfahren zur Herstellung von expandierten Artikeln von bioabbaubarem Kunststoffmaterial, umfassend das Vermischen des Kunststoffmaterials in geschmolzenem Zustand mit Wasser in einem Extruder, Extrudieren des Gemisches und Abkühlen der erhaltenen Extrudate.

WO 2007/030719 A2 offenbart ein Verfahren zur Herstellung eines Polystyrol-Schaums enthaltend einen modifizierungsmittelfreien Nano-Ton. Zur Herstellung dieses Polystyrolschaums wird eine Mischung von Wasser und dem genannten Ton in einer Mischung aus vorpolymerisiertem Polystyrol und Styrol emulgiert, gefolgt von der Polymerisation des Vorpolymerisats. Die Polystyrol-Schäume werden dann durch Verdampfen des in dem Polymer vorliegenden Wassers erzeugt.

WO 2008/087078 A1 offenbart ein Hybridsystem aus geschäumten thermoplastischen Elastomeren und Polyurethanen sowie ein Verfahren zu dessen Herstellung. Dazu wird das thermoplastische Polyurethan als Granulat mit Wasser, einem Suspensionshilfsmittel und einem Treibmittel in einem geschlossenen Reaktor bis über die Erweichungstemperatur erhitzt. Als Treibmittel werden gemäß WO 2008/087078 organische Flüssigkeiten oder anorganische Gase oder Gemische davon verwendet.

WO 2007/082838 A1 offenbart Schaumstoffe auf Basis thermoplastischer Polyurethane sowie ein Verfahren zu deren Herstellung. Die expandierten thermoplastischen Polyurethan-Partikel werden gemäß diesem Dokument durch Suspensions- oder Extrusionsverfahren hergestellt. Beim Suspensionsverfahren wird das thermoplastische Polyurethan als Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert. Das Aufschäumen dieser expandierbaren Partikel erfolgt durch Wasserdampf oder Heizluft.

US 4,613,629 offenbart ein Verfahren zur Herstellung von geschäumten thermoplastischen Polymeren. Dazu wird ein festes thermoplastisches Polymer mit einer Lösung umfassend ein carrier solvent und eine infusant solution behandelt. Gemäß US 4,613,629 sind geeignete Polymere beispielsweise Acrylpolymere, Polystyrol, Polycarbonat, Acrylonitril-Butadien-Styrol-Copolymere und andere. Gemäß den Beispielen von US 4,613,629 werden als Behandlungslösungen Mischungen von Aceton, Wasser und Polyethylenglykol verwendet. US 4,613,629 offenbart kein Verfahren zur Herstellung eines expandierbaren Polyurethans.

DE 2 158 608 offenbart ein Verfahren zur Weiterverarbeitung von Polyamidabfällen. Dazu wird das Polyamid zerkleinert und zusammen mit einer das Polyamid unter Wärmezufuhr lösenden Flüssigkeit mit einem unterhalb des Schmelzpunktes des Polyamids liegenden Siedepunkt in eine Pressform eingebracht und vor Erreichen des Schmelzpunktes des Polyamids zusammengepresst und anschließend unter Verdampfung der Flüssigkeit entspannt. DE 2 158 608 offenbart kein Verfahren zur Herstellung eines expandierbaren Polyurethans.

EP 1 275 687 A2 offenbart ein expandierbares Polyesterharz. Dazu wird dieses Harz zunächst in Strängen extrudiert und diese Stränge werden in einem Dispergiermittel dispergiert. EP 1 275 687 A2 offenbart ebenfalls kein Verfahren zur Herstellung eines expandierbaren Polyurethans.

In den aus dem Stand der Technik bekannten Verfahren wird zum Aufschäumen der entsprechenden thermoplastischen Polymere ein Treibmittel verwendet, wobei geeignete Treibmittel gemäß dem Stand der Technik organische Flüssigkeiten bzw. organische oder anorganische Gase, beispielsweise Kohlenwasserstoffe, Gase wie Stickstoff, Kohlendioxid etc., sind. Diese Treibmittel weisen den Nachteil auf, dass sie toxisch und/oder leicht entflammbar sind. Ein weiterer Nachteil von gasförmigen Treibmitteln ist eine aufwendige Verfahrensführung.

Aufgabe der vorliegenden Erfindung ist es, Verfahren zur Herstellung von expandierbaren Polyurethanen bzw. expandierten Polyurethanen bereitzustellen, in denen ein Treibmittel verwendet wird, welches nicht toxisch, nicht leicht entflammbar und unter Normalbedingungen nicht gasförmig, sondern flüssig, vorliegt. Eine weitere Aufgabe der vorliegenden Erfindung besteht darin, entsprechende Verfahren bereitzustellen, welche sich durch eine besonders einfache Verfahrensführung auszeichnen.

Diese Aufgaben werden erfindungsgemäß gelöst durch das Verfahren zur Herstellung eines expandierbaren Polyurethans enthaltend Wasser als Treibmittel, umfassend mindestens den Schritt:
(A) Lagern des Polyurethans in Wasser, so dass Wasser von dem Polyurethan aufgenommen wird, um ein expandierbares Polyurethan zu erhalten, wobei nach Schritt (A) der Wassergehalt des expandierbaren Polyurethans mindestens 5 Gew.-% beträgt,
   sowie durch das Verfahren zur Herstellung eines expandierten Polyurethans, umfassend den oben genannten Schritt (A) und mindestens den Schritt:
(B) Verdampfen des in dem Polyurethan aus Schritt (A) enthaltenen Wassers, um ein expandiertes Polyurethan zu erhalten.

Die vorliegende Erfindung betrifft ein Verfahren zur Herstellung eines expandierbaren Polyurethans enthaltend Wasser als Treibmittel.

Erfindungsgemäß geeignete thermoplastische Polyurethane, im Folgenden kurz TPU genannt, sind dem Fachmann an sich bekannt. TPU und Verfahren zur Herstellung sind vielfach beschrieben, beispielsweise in Gerhard B. Becker und Dietrich Braun, Kunststoffhandbuch, Band 7, "Polyurethane", Carl Hanser Verlag München Wien 1993.

Bei allen in dieser Schrift genannten Molmassen, angegeben in [kg/mol], handelt es sich um die zahlenmäßig mittlere Molmasse.

In bevorzugten Ausführungsformen wird TPU durch Umsetzung aus einer Mischung von Isocyanaten (a) mit gegenüber Isocyanaten reaktiven Verbindungen (b), bevorzugt mit einem Molekulargewicht von 0,5 kg/mol bis 10 kg/mol und gegebenenfalls Kettenverlängerungsmitteln (c), bevorzugt mit einem Molekulargewicht von 0,05 kg/mol bis 0,5 kg/mol hergestellt. In weiteren bevorzugten Ausführungsformen wird zur Herstellung von TPU der Mischung weiterhin mindestens ein Kettenregler (c1), ein Katalysator (d) und gegebenenfalls mindestens ein Füll-, Hilfs- und/oder Zusatzstoff zugesetzt. Die mit den Kleinbuchstaben und gegebenenfalls zusätzlich mit Ziffer bezeichneten Substanzgruppen werden auch als Komponenten angesprochen.

Die bei der Herstellung der TPU üblicherweise verwendeten Komponenten (a), (b), (c), (c1), (d) und (e) werden im Folgenden beispielhaft beschrieben und umfassen die folgenden Stoffgruppen: Isocyanate (a), gegenüber Isocyanaten reaktive Verbindungen (b), Kettenverlängerer (c), Kettenregler (c1),Katalysatoren (d) und/oder mindestens einen üblichen Füll-, Hilfs- und/oder Zusatzstoff.

Zur Herstellung von TPU wird auf jeden Fall eine Mischung aus Isocyanaten (a) und gegenüber Isocyanaten reaktiven Verbindungen (b) benötigt. Der weitere Zusatz der Komponenten (c), (c1), (d) und (e) ist optional und kann einzeln oder in allen möglichen Variationen erfolgen. Dabei ist mit Komponente jeweils eine einzelne Substanz gemeint oder eine Mischung der zu dieser Komponente gehörenden Substanzen.

Die Komponenten Isocyanate (a), gegenüber Isocyanaten reaktive Verbindungen (b), und Kettenverlängerer (c) und, sofern verwendet, auch die Kettenregler (c1) werden als Aufbaukomponenten angesprochen.

In bevorzugten Ausführungsformen werden als organische Isocyanate (a) aliphatische, cycloaliphatische, araliphatische und/oder aromatische Isocyanate, weiter bevorzugt Diisocyanate eingesetzt. Beispiele für bevorzugte Diisocyanate sind Tri-, Tetra-, Penta-Hexa-, Hepta- und/oder Oktamethylendiisocyanat, 2-Methyl-pentamethylendiisocyanat-1,5, 2-Ethyl-butylen-diisocyanat-1,4, Pentamethylen-diisocyanat-1,5, Butylen-diisocyanat-1, 4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexandiisocyanat und/oder 4,4'-, 2,4'- und 2,2'-Dicyclohexylmethan-diisocyanat, 2,2'-, 2,4'-und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyldiphenyl-diisocyanat, 1,2-Diphenylethandiisocyanat und Phenylendiisocyanat.

Als gegenüber Isocyanaten reaktive Verbindungen (b) werden in bevorzugten Ausführungsformen Polyesterole, Polyetherole und/oder Polycarbonatdiole, die üblicherweise auch unter dem Begriff "Polyole" zusammengefasst werden, verwendet.

TPU wird bevorzugt aus wenigstens einem Polyetheralkohol hergestellt, besonders bevorzugt wird wenigstens ein Polyetherdiol verwendet. Ganz besonders bevorzugte Polyetherdiole sind Polyethylenglykol und Polypropylenglycol. Bevorzugt werden die Polyetheralkohole mit einem Molekulargewicht von 0,6 bis 2,5 kg/mol, besonders bevorzugt 1,2 bis 1,9 kg/mol, verwendet. Die Polyetheralkohole werden einzeln oder auch als Mischung verschiedener Polyetheralkohole eingesetzt. Aufgrund der zu niedrigen Polarität ist Polytetrahydrofuran erfindungsgemäß nicht geeignet.

In alternativen Ausführungsformen wird TPU aus Polyesteralkohol hergestellt. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht von 0,6 bis 2,5 kg/mol auf.

In weiter bevorzugten Ausführungsformen haben diese Polyole eine mittlere Funktionalität von 1,8 bis 2,3, weiter bevorzugt 1,9 bis 2,2, insbesondere 2.

Als Kettenverlängerer (c) werden in bevorzugten Ausführungsformen aliphatische, araliphatische, aromatische und/oder cycloaliphatische Verbindungen eingesetzt, die in weiter bevorzugten Ausführungsformen ein Molekulargewicht von 0,05 bis 0,5 kg/mol haben. In einigen bevorzugten Ausführungsformen sind Kettenverlängerer (c) Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen und entsprechende Oligo- und/oder Polypropylenglykole. In weiteren Ausführungsformen werden zur Herstellung von TPU Mischungen der Kettenverlängerer eingesetzt.

In einigen Ausführungsformen werden Kettenregler (c1), üblicherweise mit einem Molekulargewicht von 0,03 bis 0,5 kg/mol verwendet. Kettenregler sind Verbindungen, die gegenüber Isocyanaten nur eine funktionelle Gruppe aufweisen. Beispiele für Ketteregler sind monofunktionelle Alkohole, monofunktionelle Amine, bevorzugt Methylamin, und/oder monofunktionelle Polyole. Durch Kettenregler kann das Fließverhalten der Gemische aus den einzelnen Komponenten gezielt eingestellt werden.

Kettenregler werden in bevorzugten Ausführungsformen in einer Menge von 0 bis 5 Gew.-%, weiter bevorzugt von 0,1 bis 1 Gew.-%, bezüglich der gegenüber Isocyanaten reaktiven Verbindung b) eingesetzt. Kettenregler werden in Ergänzung zu Kettenverlängerern oder an Stelle dieser eingesetzt.

In weiteren Ausführungsformen werden zur TPU Herstellung mindestens ein Katalysator (d) verwendet, der insbesondere die Reaktion zwischen den NCO-Gruppen der Diisocyanate (a) und den gegenüber Isocyanaten reaktiven Verbindungen, bevorzugt Hydroxylgruppen der Aufbaukomponenten (b), (c) und c1 beschleunigt. In bevorzugten Ausführungsformen ist der Katalysator ausgewählt aus der Gruppe der tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiter bevorzugten Ausführungsformen ist der mindestens eine Katalysator aus der Gruppe der organischen Metallverbindungen ausgewählt, beispielsweise Titansäureester, eine Eisenverbindung wie z.B. Eisen-(III)-acetylacetonat, eine Zinnverbindung, z.B. Zinndiacetat, Zinndioctoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren eingesetzt. In bevorzugten Ausführungsformen wird der Katalysator oder die Mischung von Katalysatoren in Mengen von 0,0001 bis 0,1 Gew.-%, bezüglich der gegenüber Isocyanaten reaktiven Verbindung (b), bevorzugt Polyhydroxylverbindung, eingesetzt.

Neben Katalysatoren (d), aber auch ohne die Verwendung von Katalysatoren können den Aufbaukomponenten (a) bis (c) und gegebenenfalls (c1) auch Hydrolyseschutzmittel wie beispielsweise polymere und niedermolekulare Carbodiimide hinzugefügt werden.

In einer weiteren Ausführungsform kann das TPU eine Phosphorverbindung enthalten. In einer bevorzugten Ausführungsform werden als Phosphorverbindungen Organophosphorverbindungen des trivalenten Phosphors, wie beispielsweise Phosphite und Phosphonite, verwendet. Beispiele für geeignete Phosphorverbindungen sind Triphenylphosphit, Diphenylalkylphosphit, Phenyldialkylphosphit, Tris-(nonylphenyl)-phosphit, Trilaurylphosphit, Trioctadecylphosphit, Di-stearyl-pentaerythritoldiphosphit, Tris-(2,4-di-tert-butylphenyl)phosphit, Di-isodecylpentaerythritoldiphosphit, Di-(2,4-di-tert-butylphenyl)pentaerythritoldiphosphit, Tristearyl-sorbitoltriphosphit, Tetrakis-(2,4-di-tert-butylphenyl)-4,4'-diphenylenediphosphonit, Trisisodecylphosphit, Diisodecylphenylphosphit und Diphenylisodecylphosphit oder Gemische daraus.

Besonders bevorzugte Ausführungsformen enthalten Phosphorverbindungen, die schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane Phosphorverbindungen geeignet, die besonders schwer hydrolysieren. Bevorzugte Ausführungsformen schwer hydrolysierbarer Phosphorverbindungen sind Dipolypropylenglykolphenylphosphit, Tri-isodecylphosphit, Triphenylmonodecylphosphit, Trisisononylphosphit, Tris-(2,4-di-tert-butylphenyl)phosphit, Tetrakis-(2,4-di-tert-butylphenyl) 4,4'-diphenylenediphosphonit und Di-(2,4-di-tert-butylphenyl)-pentaerythritol diphosphit oder Gemische davon.

Zur Einstellung der Shore-Härte von TPU können die Aufbaukomponenten (b) und (c) in relativ breiten molaren Verhältnissen variiert werden. In bevorzugten Ausführungsformen verhält sich das molare Verhältnisse von Komponente (b) zum insgesamt eingesetzten Kettenverlängerer (c) wie 10 : 1 bis 1 : 10, bevorzugt 5 : 1 bis 1 : 8, weiter bevorzugt wie 3 : 1 bis 1 : 4, wobei die Härte von TPU mit zunehmendem. Gehalt an Kettenverlängerer (c) ansteigt. Auf diese Weise können Shore-Härten von A44 bis D80 eingestellt werden, besonders bevorzugt sind Shore-Härten von A44 bis A90. Die Shore-Härten werden bestimmt nach der DIN 53505.

In weiter bevorzugten Ausführungsformen erfolgt die Umsetzung zu TPU bei üblichen Kennzahlen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 100 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 100 liegen mehr Isocyanatgruppen als gegenüber Isocyanaten reaktive Gruppen, beispielsweise OH-Gruppen, vor. In besonders bevorzugten Ausführungsformen erfolgt die Umsetzung zu TPU bei einer Kennzahl zwischen 60 und 120, weiter bevorzugt bei einer Kennzahl zwischen 80 und 110.

Die Herstellung von TPU wird bevorzugt nach einem der im Folgenden erläuterten bekannten Verfahren durchgeführt. Bevorzugten Ausführungsformen sind das kontinuierliche Verfahren, beispielsweise mit Reaktionsextrudern, das Bandverfahren, das "One-shot"-Verfahren oder das Prepolymerverfahren. Ebenfalls bevorzugte Ausführungsformen sind das diskontinuierliche Verfahren oder das Prepolymerprozess-Verfahren. Bei diesen Verfahren können die zur Reaktion kommenden Komponenten (a) und (b) sowie gegebenenfalls (c), (c1), (d) und/oder (e) nacheinander oder gleichzeitig miteinander vermischt werden, wobei die Reaktion der Komponenten (a) und (b) unmittelbar einsetzt. Beim Extruderverfahren werden die Aufbaukomponenten (a) und (b) sowie gegebenenfalls die Komponenten (c), (c1), (d) und/oder (e) einzeln oder als Gemisch in den Extruder eingeführt und z. B. bei Temperaturen von 100 bis 280 °C, vorzugsweise bei 140 bis 250 °C, zur Reaktion gebracht. Das so erhaltene TPU wird extrudiert, abgekühlt und granuliert. Gegebenenfalls kann es zweckmäßig sein, das erhaltene TPU vor der Weiterverarbeitung bei 80 bis 120 °C, vorzugsweise bei 100 bis 110 °C über einen Zeitraum von 1 bis 24 Stunden zu tempern, d. h. dem Gemisch bei konstanter Temperatur die Möglichkeit zu geben weiter zu reagieren.

Das erfindungsgemäß herstellbare expandierbare Polyurethan kann des Weiteren dem Fachmann bekannte übliche Additive enthalten, beispielsweise ausgewählt aus der Gruppe bestehend aus Keimbildnern, UV-Stabilisatoren, Weichmachern, Beschichtungsmitteln, Hydrophobierungsmitteln, Antioxidantien, Wärmestabilisatoren, Flammschutzmitteln, Hydrolyseschutzmitteln, organischen und/oder anorganischen Pigmenten, athermanen Partikel und Mischungen davon.

Diese gegebenenfalls vorliegenden Additive liegen im Allgemeinen in einer Menge von 0,0001 bis 20 Gew.-%, bevorzugt 0,001 bis 10 Gew.-%, jeweils bezogen auf das gesamte expandierbare Polyurethan, vor.

Die in dem erfindungsgemäßen Verfahren eingesetzten Polyurethane können in jeder dem Fachmann bekannten dreidimensionalen Form vorliegen. Bevorzugte Ausführungsformen umfassen flächenförmige Polyurethane, beispielsweise Platten mit einer Dicke von 1 bis 100 mm, quaderförmige Polyurethane, oder besonders bevorzugt entsprechende teilchenförmige Polyurethane in Form von Partikeln oder Granulat. Geeignete Partikel oder Granulate und Verfahren zu ihrer Herstellung sind dem Fachmann bekannt und beispielsweise in "Handbuch der technischen Polymerchemie" von Adolf Echte, VCH (1993) beschrieben.

Daher betrifft die vorliegende Erfindung bevorzugt ein erfindungsgemäßes Verfahren, wobei das wenigstens eine Polyurethan in Schritt (A) in Form von Partikeln oder Granulat eingesetzt wird.

Besonders bevorzugte Partikel oder Granulate aus den Polyurethanen sind beispielsweise kugelförmig und weisen einen Durchmesser von 0,1 bis 10 mm, bevorzugt 0,2 bis 5 mm, auf.

### Schritt (A):

Schritt (A) des erfindungsgemäßen Verfahrens zur Herstellung eines expandierbaren Polyurethans enthaltend Wasser als Treibmittel umfasst das Lagern des Polyurethans in Wasser, so dass Wasser von dem Polyurethan aufgenommen wird, um ein expandierbares Polyurethan zu erhalten, wobei nach Schritt (A) der Wassergehalt des expandierbaren Polyurethans mindestens 5 Gew.-% beträgt.

Unter "Lagern des Polyurethans" wird erfindungsgemäß verstanden, dass das Polyurethan in Kontakt mit Wasser gebracht wird, so dass bevorzugt wenigstens 50 %, besonders bevorzugt wenigstens 80 % der Oberfläche des Polyurethans mit Wasser in direktem Kontakt stehen. Dies erfolgt in einer bevorzugten Ausführungsform, indem das entsprechende Polyurethan in der genannten dreidimensionalen Form, beispielsweise als Partikel oder Granulat, in Wasser eingetaucht wird, so dass das thermoplastische Polymer bevorzugt vollständig von Wasser umgeben wird. Erfindungsgemäß kann dies in allen für den Fachmann als geeignet bekannten Vorrichtungen bzw. Reaktoren erfolgen, beispielsweise in einem Rührkessel.

In einer bevorzugten Ausführungsform des erfindungsgemäßen Verfahrens erfolgt Schritt (A) durch das Suspensionsverfahren.

Daher betrifft die vorliegende Erfindung auch das erfindungsgemäße Verfahren, wobei Schritt (A) durch das Suspensionsverfahren erfolgt.

Beim Suspensionsverfahren wird das Polyurethan im Allgemeinen als Granulat mit Wasser, einem Suspensionshilfsmittel und dem Treibmittel in einem geschlossenen Reaktor bis über die Erweichungstemperatur des Granulats erhitzt. Dabei werden die Polymerpartikel mit dem Treibmittel imprägniert.

Als Treibmittel für diese bevorzugte Ausführungsform von Schritt (A) sind bevorzugt anorganische Verbindungen geeignet, beispielsweise ausgewählt aus der Gruppe bestehend aus Stickstoff, Luft, Kohlendioxid, Ammoniak, Edelgasen und Mischungen davon.

Die Menge des genannten Treibmittels oder einer Mischung davon beträgt bevorzugt 0,1 bis 40, insbesondere 0,5 bis 35 und besonders bevorzugt 1 bis 30 Gew.-Teile, bezogen auf 100 Gew.-Teile eingesetztes Polyurethan.

Beim Suspensionsverfahren arbeitet man in der Regel absatzweise in einem Imprägnierbehälter, z.B. in einem Rührkesselreaktor. In den Reaktor werden das Polyurethan, z.B. als Minigranulat, eindosiert, außerdem Wasser bzw. ein weiteres Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,005 bis 10 Gew.-%, bezogen auf das Polyurethan, verwendet.

Das durch das bevorzugte durchgeführte Suspensionsverfahren imprägnierte Polyurethan kann dann in Schritt (B) aufgeschäumt werden.

Erfindungsgemäß kann, beispielsweise durch Destillation, Entmineralisierung oder Osmose gereinigtes Wasser oder an sich bekanntes Leitungs- bzw. Trinkwasser, enthaltend beispielsweise Mineralstoffe als Fremdstoffe in Schritt (A) des erfindungsgemäßen Verfahrens verwendet werden.

In einer bevorzugten Ausführungsform des erfindungsgemäßen Verfahrens beträgt in Schritt (A) das Gewichtsverhältnis von Polyurethan zu Wasser 0,01 bis 1, besonders bevorzugt 0,1 bis 0,8.

Das Lagern in Schritt (A) des erfindungsgemäßen Verfahrens wird für einen Zeitraum durchgeführt, der so zu bemessen ist, dass, abhängig von eingesetztem Polyurethan, Ausformung und Größe der eingesetzten flächen- oder teilchenförmigen Polymere, Temperatur und/oder Druck, eine ausreichende Menge Wasser von dem wenigstens einen Polyurethan aufgenommen wird.

Bevorzugt erfolgt das Lagern in Schritt (A) für 1 bis 300 h, bevorzugt 2 bis 200 h, besonders bevorzugt 4 bis 170 h.

Die Temperatur, bei der Schritt (A) des erfindungsgemäßen Verfahrens durchgeführt wird, beträgt im Allgemeinen 5 bis 90 °C, bevorzugt 10 bis 60 °C, besonders bevorzugt 20 bis 40 °C, beispielsweise Umgebungstemperatur.

Wird das bevorzugte Suspensionsverfahren angewandt, beträgt die Temperatur, bei der Schritt (A) durchgeführt wird, im Allgemeinen mindestens 90 °C. Die Imprägnier-temperatur sollte in der Nähe der Erweichungstemperatur des Polyurethans liegen. Es sind Imprägniertemperaturen von 90 bis 300 °C, insbesondere 100 bis 250 °C bevorzugt.

Der Druck, bei dem Schritt (A) des erfindungsgemäßen Verfahrens durchgeführt wird, beträgt im Allgemeinen 0,5 bis 5 bar, bevorzugt 0,8 bis 2 bar, besonders bevorzugt 0,9 bis 1,2 bar, beispielsweise Atmosphärendruck.

Wird das bevorzugte Suspensionsverfahren angewandt, stellt sich je nach Menge und Art des Treibmittels sowie nach der Höhe der Temperatur im verschlossenen Reaktor ein Druck (Imprägnierdruck) ein, der im Allgemeinen 2 bis 100 bar (absolut) beträgt. Falls erforderlich, kann man den Druck durch ein Druckregelventil oder Nachpressen von Treibmittel regulieren.

Schritt (A) des erfindungsgemäßen Verfahrens wird im Allgemeinen so lange durchgeführt, bis das Polyurethan genügend Wasser aufgenommen hat, damit es in einem gegebenenfalls folgenden Expansionsschritt in ein expandiertes Polyurethan mit gewünschten Eigenschaften überführt werden kann. Gemäß dem erfindungsgemäßen Verfahren beträgt nach Schritt (A) der Wassergehalt des expandierbaren Polyurethans mindestens 5 Gew.-%, bevorzugt mindestens 10 Gew.-%, besonders bevorzugt mindestens 15 Gew.-%. Der maximale Wassergehalt beträgt im Allgemeinen 200 Gew.-%, bevorzugt 150 Gew.-%. Der Wassergehalt nach Schritt (A) wird durch die Gewichtszunahme des in Wasser gelagerten Polyurethans bestimmt.

Das erfindungsgemäße Verfahren umfassend Schritt (A) weist den Vorteil auf, dass toxikogisch und anwendungstechnisch vollkommen unbedenkliches Wasser als Treibmittel in das Polyurethan eingebracht werden kann. Von Vorteil ist dabei, dass die Verteilung des Wassers in dem Produkt aus Schritt (A) bevorzugt vollkommen homogen ist, was unter anderem dazu führt, dass nach Expansion des erfindungsgemäß hergestellten expandierbaren Polyurethans ein expandiertes Polyurethan erhalten wird, welches eine besonders gleichmäßige, d. h. homogene, Dichterverteilung aufweist. Nach Schritt (A) des erfindungsgemäßen Verfahrens kann das erhaltene expandierbare Polyurethan von gegebenenfalls oberflächlich anhaftendem Wasser befreit werden, beispielsweise durch mechanisches. Abstreifen oder Trocknen im Konvektionstrockner wie z. B. einem Stromtrockner.

Die vorliegende Erfindung betrifft auch ein expandierbares Polyurethan, erhältlich durch das erfindungsgemäße Verfahren. Die bezüglich des Verfahrens genannten Merkmale und bevorzugten Ausführungsformen gelten für das expandierbare Polyurethan entsprechend.

Die vorliegende Erfindung betrifft auch ein Verfahren zur Herstellung eines expandierten Polyurethans, umfassend den erfindungsgemäßen Schritt (A) und mindestens den Schritt:
(B) Verdampfen des in dem Polyurethan aus Schritt (A) enthaltenen Wassers, um ein expandiertes Polyurethan zu erhalten.

Dieses erfindungsgemäße Verfahren dient zur Herstellung eines expandierten Polyurethans aus dem gemäß Schritt (A) hergestellten expandierbaren Polyurethan.

Daher betrifft die vorliegende Erfindung auch ein Verfahren zur Herstellung eines expandierten Polyurethans, umfassend mindestens die Schritte:
(A) Lagern des Polyurethans in Wasser, so dass Wasser von dem Polyurethan aufgenommen wird, um ein expandierbares Polyurethan zu erhalten, wobei nach Schritt (A) der Wassergehalt des expandierbaren Polyurethans mindestens 5 Gew.-% beträgt, und
(B) Verdampfen des in dem Polyurethan aus Schritt (A) enthaltenen Wassers, um ein expandiertes Polyurethan zu erhalten.

Das Verdampfen des in dem Polyurethan enthaltenen Wassers gemäß Schritt (B) des erfindungsgemäßen Verfahrens kann durch Einstellen einer geeigneten Temperatur und/oder eines geeigneten Druckes erfolgen. Durch die in Schritt (B) vorliegende Temperatur wird das vorliegende Wasser erhitzt, so dass es zumindest teilweise verdampft, und so das expandierbare Polyurethan aus Schritt (A) durch die mit dem zumindest teilweisen Verdampfen verbundenen Volumenvergrößerung in ein expandiertes Polyurethan überführt wird. Durch das optionale Anlegen eines Druckes unterhalb Atmosphärendruckes kann das Verdampfen zusätzlich gefördert werden.

Das Erhitzen gemäß Schritt (B) des erfindungsgemäßen Verfahrens kann im Allgemeinen nach allen dem Fachmann bekannten Verfahren erfolgen, beispielsweise durch Wasserdampf, Heißluft, organische Wärmeträger wie Mineralöle, Einwirkung von Hochfrequenzstrahlung, beispielsweise Mikrowellenstrahlung, oder Kombinationen dieser Verfahren.

In einer bevorzugten Ausführungsform des erfindungsgemäßen Verfahrens erfolgt das Verdampfen in Schritt (B) durch Hochfrequenzbestrahlung. Bei dieser dielektrischen Strahlung kann im Allgemeinen mit Mikrowellen im Frequenzbereich von 0,2 GHz bis 100 GHz gearbeitet werden. Für die industrielle Praxis stehen Frequenzen von 0,915, 2,45 und 5,8 GHz zur Verfügung, wobei 2,45 GHz besonders bevorzugt sind.

Strahlungsquelle für dielektrische Strahlung ist das Magnetron, wobei auch mit mehreren Magnetronen gleichzeitig bestrahlt werden kann. Es ist darauf zu achten, dass bei der Bestrahlung die Feldverteilung möglichst homogen ist.

Zweckmäßigerweise wird die Bestrahlung so durchgeführt, dass die Leistungsaufnahme des in Schritt (A) erhaltenen Polyurethans 1 bis 400 kW, vorzugsweise 5 bis 300 kW, jeweils bezogen auf 1 kg Wasser im Polymer, beträgt. Ist die aufgenommene Leistung geringer, so findet kein Aufschäumen statt. Arbeitet man innerhalb des genannten Bereichs, so schäumt die Mischung umso schneller, je größer die Leistungsaufnahme ist. Oberhalb von etwa 400 kW pro kg Wasser erhöht sich die Schäumgeschwindigkeit nicht mehr wesentlich.

In einer weiter bevorzugten Ausführungsform erfolgt das Verdampfen gemäß Schritt (B) durch Beaufschlagung des expandierbaren Polyurethans enthaltend Wasser als Treibmittel mit Wasserdampf. Daher betrifft die vorliegende Erfindung auch das erfindungsgemäße Verfahren, wobei das Verdampfen in Schritt (B) durch Beaufschlagen mit Wasserdampf mit einer Temperatur von 100 bis 200 °C erfolgt.

Dies kann im Allgemeinen in allen dem Fachmann bekannten Reaktoren erfolgen, beispielsweise in einem druckfesten Reaktor wie einem Druckvorschäumer. In einer besonders bevorzugten Ausführungsform des erfindungsgemäßen Verfahrens wird daher in Schritt (B) das in Schritt (A) erhaltene expandierbare Polyurethan, bevorzugt als Granulat, in einen Druckvorschäumer gefüllt, und dann mit Wasserdampf behandelt.

In Schritt (B) des erfindungsgemäßen Verfahrens wird das in Schritt (A) erhaltene Polyurethan erwärmt, um das Wasser in dem Polyurethan zumindest teilweise zu verdampfen, um ein expandiertes Polyurethan zu erhalten.

Im Rahmen der vorliegenden Erfindung bedeutet "zumindest teilweise verdampfen", dass wenigstens 60 Gew.-%, bevorzugt wenigstens 70 Gew.-%, besonders bevorzugt wenigstens 80 Gew.-%, des in Schritt (A) aufgenommenen Wassers in Schritt (B) verdampft werden.

Daher erfolgt Schritt (B) des erfindungsgemäßen Verfahrens im Allgemeinen bei einer Temperatur von 60 bis 200 °C, bevorzugt 80 bis 180 °C, besonders bevorzugt 100 bis 160 °C.

Der in Schritt (B) bevorzugt verwendete Wasserdampf weist im Allgemeinen eine Temperatur von 100 bis 200 °C, bevorzugt 110 bis 180 °C, besonders bevorzugt 120 bis 170 °C, auf.

Schritt (B) wird im Allgemeinen so lange durchgeführt, bis das expandierte Polyurethan durch das Expandieren eine gewünschte Dichte aufweist: Beispielsweise weisen bevorzugt hergestellte Partikel aus expandiertem Polyurethan eine Schüttdichte von 10 bis 600 g/L, bevorzugt 15 bis 500 g/L, besonders bevorzugt 20 bis 400 g/L, auf.

Schritt (B) des erfindungsgemäßen Verfahrens kann in einer bevorzugten Ausführungsform derart durchgeführt werden, dass die heiße Suspension aus Schritt (A) ohne Abkühlen schlagartig entspannt wird (Explosionsexpansionsverfahren), wobei die erweichten, treibmiftelhaltigen Partikel unmittelbar zu den expandierten Partikeln aufschäumen, siehe z.B. WO 94/20568.

Diese bevorzugte Ausführungsform von Schritt (B) des erfindungsgemäßen Verfahrens wird bevorzugt durchgeführt, wenn in Schritt (A) das bevorzugte Suspensionsverfahren angewandt wird.

Die vorliegende Erfindung betrifft daher bevorzugt das erfindungsgemäße Verfahren, wobei Schritt (B) derart durchgeführt wird, dass die heiße Suspension aus Schritt (A) ohne Abkühlen schlagartig entspannt wird.

In dieser bevorzugten Ausführungsform von Schritt (B) wird die Suspension üblicherweise durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Partikel aus Polyurethan ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel nachpresst. In der Regel kühlt-man die Suspension nach dem Entspannen ab, trennt die expandierten Partikel aus Polyurethan üblicherweise aus der Suspension ab, entfernt ggf. davor oder danach anhaftendes Suspensionshilfsmittel, und wäscht und trocknet schließlich die Partikel.

Die in Schritt (B) bevorzugt erhaltenen Partikel aus einem expandierten Polyurethan weisen bevorzugt einen Durchmesser von 0,5 bis 15 mm, besonders bevorzugt 0,7 bis 10 mm, ganz besonders bevorzugt 1 bis 8 mm, auf.

Das in Schritt (A) erzeugte expandierbare Polyurethan oder das in Schritt (B) erzeugte expandierte Polyurethan kann in weiteren Schritten beispielsweise zu Schaumstoffen verarbeitet werden. Verfahren dazu sind dem Fachmann bekannt, beispielsweise Vorschäumen der expandierbaren Polyurethane in einem ersten Schritt mit Wasserdampf in offenen oder geschlossenen Vorschäumern zu den entsprechenden expandierten Polyurethanen, und Verschweißen der expandierten Polyurethane, bevorzugt in Form von Partikeln bzw. Perlen, in gasdurchlässigen Formen mittels Wasserdampf zu Formteilen oder Platten.

### Beispiele

### Beispiel 1

100 Gewichtsteile thermoplastisches Polyurethan A (Zusammensetzung siehe Tabelle 1) werden als Granulat mit einem mittleren Durchmesser von 3 mm in 250 Gewichtsteilen Wasser für 48 h gelagert. Anschließend wird das Granulat entnommen und das anhaftende Oberflächenwasser durch Trocknen im Luftstrom entfernt. Die Gewichtszunahme durch Wasserlagerung beträgt 60 Gew.-%, bezogen auf das Ausgangsgranulat. Das wasserhaltige Granulat wird in einem Druckvorschäumer für 20 s mit 10 bar Wasserdampf beaufschlagt, wobei es expandiert. Die Schüttdichte der expandierten Partikel beträgt 300 g/L.

### Beispiel 2

100 Gewichtsteile thermoplastisches Polyurethan B (Zusammensetzung siehe Tabelle 1) werden als Granulat- mit einem mittleren Durchmesser von 3 mm in 250 Gewichtsteilen Wasser für 48 h gelagert. Anschließend wird das Granulat entnommen und das anhaftende Wasser durch Trocknen im Luftstrom entfernt. Die Gewichtszunahme durch Wasserlagerung beträgt 2 Gew.-%, bezogen auf das Ausgangsgranulat. Das wasserhaltige Granulat wird in einem Druckvorschäumer für 20 s mit 10 bar Wasserdampf beaufschlagt, wobei es nicht expandiert.

**Tabelle 1**

| **TPU** | Zusammensetzung [Mol] | | | | Shorehärte (DIN 53505) |
|---|---|---|---|---|---|
| | Polyethylenglyol (1650 g/mol) | PTHF^{a} (1000 g/mol) | Butan-1,4-diol | 4,4'-MDI^{b} | |
| **A** | 0,61 | - | 2,11 | 2,72 | A85 |
| **B** | - | 1,00 | 1,60 | 2,60 | A85 |

| | | | | | |
|---|---|---|---|---|---|
| ^{a} Polytetrahydrofuran ^{b} 4,4'-Diphenylmethandiisocyanat | | | | | |

## Patentansprüche

1. Verfahren zur Herstellung eines expandierbaren Polyurethans enthaltend Wasser als Treibmittel, umfassend mindestens den Schritt:
(A) Lagern des Polyurethans in Wasser, so dass Wasser von dem Polyurethan aufgenommen wird, um ein expandierbares Polyurethan zu erhalten, wobei nach Schritt (A) der Wassergehalt des expandierbaren Polyurethans mindestens 5 Gew.-% beträgt.

2. Verfahren zur Herstellung eines expandierten Polyurethans, umfassend Schritt (A) gemäß Anspruch 1 und mindestens den Schritt:
(B) Verdampfen des in dem Polyurethan aus Schritt (A) enthaltenen Wassers, um ein expandiertes Polyurethan zu erhalten.

3. Verfahren nach Anspruch 1 oder 2, **dadurch gekennzeichnet, dass** in Schritt (A) das Gewichtsverhältnis von Polyurethan zu Wasser 0,01 bis 1 beträgt.

4. Verfahren nach Anspruch 2 oder 3, **dadurch gekennzeichnet, dass** das Verdampfen in Schritt (B) durch Beaufschlagen mit Wasserdampf mit einer Temperatur von 100 bis 200 °C erfolgt.

5. Verfahren nach einem der Ansprüche 2 oder 3, **dadurch gekennzeichnet, dass** das Verdampfen in Schritt (B) durch Hochfrlequenzbestrahlung erfolgt.

6. Verfahren nach einem der Ansprüche 1 bis 5, **dadurch gekennzeichnet, dass** das Polyurethan in Schritt (A) in Form von Partikeln oder Granulat eingesetzt wird.

7. Verfahren nach einem der Ansprüche 1 bis 6, **dadurch gekennzeichnet, dass** Schritt (A) durch das Suspensionsverfahren erfolgt.

8. Verfahren nach einem der Ansprüche 2, 3, 6 oder 7, **dadurch gekennzeichnet, dass** Schritt (B) derart durchgeführt wird, dass die heiße Suspension aus Schritt (A) ohne Abkühlen schlagartig entspannt wird.

9. Expandierbares Polyurethan, erhältlich durch ein Verfahren nach einem der Ansprüche 1 oder 3 bis 8.

## Claims

1. A process for the production of an expandable polyurethane comprising water as blowing agent, comprising at least the step of:
(A) Storage of the polyurethane in water, so that water is absorbed by the polyurethane, in order to obtain an expandable polyurethane, where after step (A), the water content of the expandable polyurethane is at least 5% by weight.

2. A process for the production of an expanded polyurethane, comprising step (A) according to claim 1 and at least the step of:
(B) evaporation of the water comprised in the polyurethane from step (A), in order to obtain an expanded polyurethane.

3. The process according to claim 1 or 2, wherein, in step (A), the ratio by weight of polyurethane to water is from 0.01 to 1.

4. The process according to claim 2 or 3, wherein the evaporation in step (B) takes place via treatment with steam at a temperature of from 100 to 200°C.

5. The process according to either of claims 2 and 3, wherein the evaporation in step (B) takes place via high-frequency irradiation.

6. The process according to any of claims 1 to 5, wherein the polyurethane is used in step (A) in the form of particles or granules.

7. The process according to any of claims 1 to 6, wherein step (A) is achieved via the suspension process.

8. The process according to any of claims 2, 3, 6, or 7, wherein the conduct of step (B) is such that the hot suspension from step (A) is subjected to sudden depressurization without cooling.

9. An expandable polyurethane, obtainable via a process according to any of claims 1 or 3 to 8.

## Revendications

1. Procédé pour la préparation d'un polyuréthane expansible contenant de l'eau comme agent gonflant, comprenant au moins l'étape :
(A) entreposage du polyuréthane dans l'eau, de telle sorte que l'eau soit absorbée par le polyuréthane, pour obtenir un polyuréthane expansible, la teneur en eau du polyuréthane expansible après l'étape (A) valant au moins 5% en poids.

2. Procédé pour la préparation d'un polyuréthane expansé comprenant l'étape (A) selon la revendication 1 et au moins l'étape :
(B) évaporation de l'eau contenue dans le polyuréthane de l'étape (A) pour obtenir un polyuréthane expansé.

3. Procédé selon la revendication 1 ou 2, **caractérisé en ce que** dans l'étape (A) le rapport pondéral de polyuréthane à eau vaut 0,01 à 1.

4. Procédé selon la revendication 2 ou 3, **caractérisé en ce que** l'évaporation dans l'étape (B) a lieu par sollicitation à la vapeur d'eau à une température de 100°C à 200°C.

5. Procédé selon l'une quelconque des revendications 2 ou 3, **caractérisé en ce que** l'évaporation dans l'étape (B) a lieu par une irradiation à haute fréquence.

6. Procédé selon l'une quelconque des revendications 1 à 5, **caractérisé en ce que** le polyuréthane dans l'étape (A) est utilisé sous forme de particules ou de granulat.

7. Procédé selon l'une quelconque des revendications 1 à 6, **caractérisé en ce que** l'étape (A) a lieu par un procédé en suspension.

8. Procédé selon l'une quelconque des revendications 2, 3, 6 ou 7, **caractérisé en ce que** l'étape (B) est réalisée de manière telle que la suspension chaude de l'étape (A) est détendue sans refroidissement brusque.

9. Polyuréthane expansible, pouvant être obtenu par un procédé selon l'une quelconque des revendications 1 ou 3 à 8.
